# FASCICULE DE BREVET EUROPEEN

(11) **EP 2 628 551 B1**
(45) Date de publication et mention de la délivrance du brevet: **01.04.2015**
(21) Numéro de dépôt: 13154798.6
(22) Date de dépôt: 11.02.2013
(51) Int. Cl.: B07C 5/36, B07C 5/342, B65G 47/96

(54) **Dispositif de tri de produits, notamment de fruits ou de légumes**
Vorrichtung zum Sortieren von Produkten, insbesondere für Obst oder Gemüse
Device for sorting products, in particular fruits or vegetables

(30) Priorité: 15.02.2012 FR 1251398
(43) Date de publication de la demande: 21.08.2013
(73) Titulaire: Calibrex, 84300 Cavaillon (FR)
(72) Inventeur: Durand, Michel, 84300 Cavaillon (FR)
(74) Mandataire: Parzy, Benjamin Alain

(56) Documents cités:
- FR-A1- 2 893 518
- US-A- 5 024 047

## Description

L'invention concerne un dispositif de tri de produits, notamment de fruits ou légumes, comportant des moyens de convoyage desdits produits qui comprennent au moins deux parties linéaires reliées par au moins une partie courbe, permettant de réaliser un tri rapide et précis en fonction d'au moins une caractéristique de ces produits, en particulier en fonction de leur masse.

### ARRIERE PLAN DE L'INVENTION

On connait de nombreux dispositifs de tri de produits dans lesquels le tri s'effectue après avoir déterminé une caractéristique du produit, par exemple sa masse. Ces dispositifs de tri comportent au moins les éléments suivants :
- des moyens de convoyage ;
- des moyens de prise d'informations ;
- des moyens d'analyse des informations obtenues ;
- des moyens de sélection, comprenant par exemple des moyens d'éjection, adaptés à éjecter les produits en fonction des informations analysées vers des compartiments ou éléments de stockage.

En règle générale, les moyens de convoyage comprennent une partie linéaire le long de laquelle sont disposés les moyens d'alimentation ou de chargement en produits à trier, les moyens de prise d'informations, ainsi que les moyens de sélection.

Cette disposition des différents éléments occupe une place importante dans un hangar. Aussi, pour limiter l'encombrement de tel dispositif, il a été proposé de configurer les moyens de convoyage pour qu'ils présentent plusieurs parties linéaires reliées entre elles.

Par ailleurs, le tri des produits fragiles tels que les fruits ou les légumes nécessite d'adapter les moyens de convoyage de telle sorte que les contacts entre les produits convoyés soient limités au maximum. Ainsi, de nombreux dispositifs de tri de fruits ou légumes sont équipés de coupelles pourvues d'un logement dans chacun desquels vient se loger un produit à trier. A titre d'illustration, on peut par exemple citer le document FR 2 789 608 ou le document FR 2 849 790.

Le document FR 2 893 518 décrit quant à lui un dispositif de tri de fruits comprenant des moyens de convoyage à coupelles formant une boucle avec deux parties linéaires reliées par des parties courbes. Les moyens d'alimentation en fruits à trier, les moyens de prise d'informations sont disposés sur une des deux parties linéaires et les moyens de stockage sont disposés sur l'autre partie linéaire.

Cependant, ces dispositifs de tri munis de coupelles, bien que permettant de préserver la qualité des produits, ne sont pas toujours précis. De manière idéale, une coupelle doit recueillir un seul et unique fruit, permettant ainsi une prise d'information précise et un tri efficace. Il est possible de régler les moyens d'alimentation en fruits du dispositif de tri pour faire en sorte qu'il n'y ait qu'un fruit par coupelle. Cependant, cette solution oblige à diminuer drastiquement la vitesse d'alimentation et donc la vitesse de tri, ce qui n'est pas compatible avec les exigences du secteur. Ainsi, afin de préserver un débit acceptable (typiquement une tonne de fruits par heure environ), les dispositifs de tri sont suralimentés en fruits ou légumes à trier. Mais en conséquence, il y a plus de produits que de coupelles, certains d'entre eux se positionnant à cheval entre deux coupelles. Ceci est particulièrement vrai lorsque les dimensions des logements des coupelles ne sont pas parfaitement adaptées aux produits à trier ou lorsque les produits ont des dimensions très variables. La prise d'information se trouve alors faussée, puisque chaque fruit ne sera pas exactement positionné dans le logement de chaque coupelle. La prise d'information est alors inexacte et le tri ne sera pas conforme.

### OBJET DE L'INVENTION

Un but de l'invention est de proposer un dispositif de tri de produits fragiles, en particulier de fruits ou légumes, précis, rapide, performant et peu coûteux quelque soit les dimensions des produits à trier.

### RESUME DE L'INVENTION

En vue de la réalisation de ce but, on propose un dispositif de tri de produits, notamment de fruits ou légumes, comprenant :
- des moyens de convoyage comprenant un train de coupelles et s'étendant selon un trajet qui comprend au moins des première et deuxième parties linéaires reliées par au moins une courbe ;
- des moyens d'alimentation en produits à trier, suivis
- de moyens de prise d'information sur lesdits produits, eux-mêmes suivis
- des moyens de sélection pour sélectionner les produits en fonction des informations prises.

Selon l'invention, les moyens de prise d'information sont disposés dans la courbe.

La disposition des moyens de prise d'information dans la courbe offre plusieurs avantages :
- les coupelles s'écartent dans la courbe de sorte que les produits qui sont à cheval sur les coupelles sont naturellement éjectés des coupelles ;
- les coupelles étant écartées, la prise d'information ne concerne qu'une coupelle à la fois et est ainsi beaucoup plus fiable.

D'autres caractéristiques et avantages de l'invention ressortiront à la lecture de la description détaillée qui suit, d'un mode de mise en oeuvre particulier non limitatif de l'invention.

### BREVE DESCRIPTION DES FIGURES

La description détaillée fera référence aux figures des dessins annexés parmi lesquelles :
- la figure 1 est une vue de dessus d'un dispositif de tri conforme à l'invention ;
- la figure 2 est une vue en perspective du dispositif de la figure 1 ;
- la figure 3 est une vue en perspective de détail selon la flèche F de la figure 1 d'un premier moyen d'élimination des fruits surnuméraires équipant le dispositif de la figure 1 ;
- la figure 4 est une vue en perspective de détail d'un deuxième moyen d'élimination des produits surnuméraires et de la sole de pesage situés dans la courbe équipant le dispositif de la figure 1;
- la figure 5 est une vue de dessus du détail du système de prise d'information, en l'occurrence de la sole de pesage équipant le dispositif de la figure 1 ;
- la figure 6 illustre les moyens de sélection des fruits équipant le dispositif de la figure 1 ;
- la figure 7 est une vue en perspective d'une coupelle équipant les moyens de convoyage du dispositif de la figure 1 ;
- La figure 8 est une vue de la face avant de la coupelle de la figure 7.

### DESCRIPTION DETAILLEE D'UN MODE DE REALISATION DE L'INVENTION

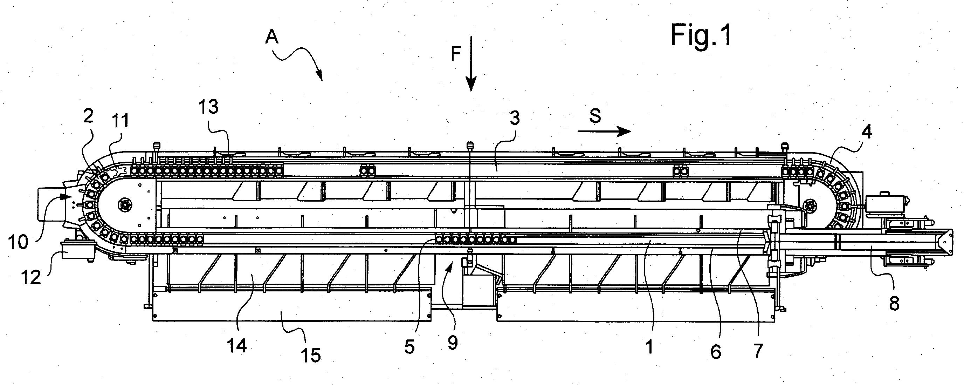

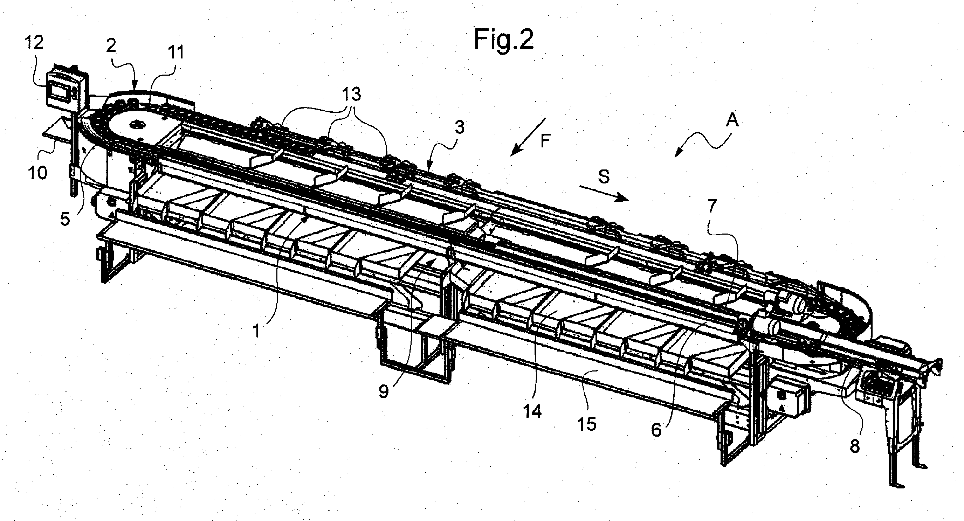

Les figures 1 et 2 illustrent un dispositif de tri de fruits comprenant un convoyeur A qui présente une première partie linéaire 1 et une deuxième partie linéaire 3 reliées entre elles par une première partie courbe 2 et une deuxième partie courbe 4 formant ensemble une boucle fermée. Le convoyeur A comprend un train continu de coupelles 5 qui se déplacent selon le trajet défini par la boucle fermée dans le sens indiqué par la flèche S. Afin de faciliter la lecture des figures, seules quelques coupelles ont été représentées.

Le convoyeur A est, dans l'exemple illustré, alimenté en fruits à l'entrée de la première partie linéaire par un convoyeur à bande 8. Les fruits se répartissent sur le train de coupelles 5. La plupart des fruits viennent se loger dans les logements des coupelles. Certains des fruits se positionnent sur les coupelles, à cheval sur celles-ci, en étant éventuellement coincés entre des fruits reçus dans les logements des coupelles. Pour faciliter la réception des fruits et favoriser leur positionnement dans les coupelles, l'entrée de la première partie linéaire 1 est équipée d'un guide extérieur 6 et d'un guide intérieur 7 entre lesquels les coupelles 5 se déplacent.

Un premier moyen d'élimination des fruits surnuméraires 9 est disposé sensiblement au milieu de la première partie linéaire 1, et un deuxième moyen d'élimination des fruits surnuméraires 10 est positionné en entrée de la première courbe 2. Ces moyens d'élimination seront détaillés plus loin.

Les coupelles sont ensuite pesées individuellement grâce à une sole de pesage 11, qui est selon l'invention, disposée dans la première courbe 2 ici dans sa deuxième partie. L'information acquise sur la masse du fruit grâce à la sole de pesage 11 est traitée par un ordinateur 12 qui commande ensuite la sélection et l'évacuation des fruits en fonction de leur masse le long de la partie linéaire 3. A cet effet, les coupelles sont montées basculantes vers l'intérieur de la boucle, des basculeurs 13 montés le long de la deuxième partie linéaire 3 faisant basculer les coupelles pour faire tomber les fruits dans des compartiments respectifs 14 qui s'étendent sous la première partie linéaire 1 pour déboucher sur un banc 15. Les fruits sont alors accessibles à un opérateur pour être conditionnés par exemple dans des caisses posées sur le banc 15.

Les coupelles vides terminent leur trajet et reviennent par la deuxième courbe 4 pour recevoir à nouveau des fruits à trier délivrés par le convoyeur à bande 8.

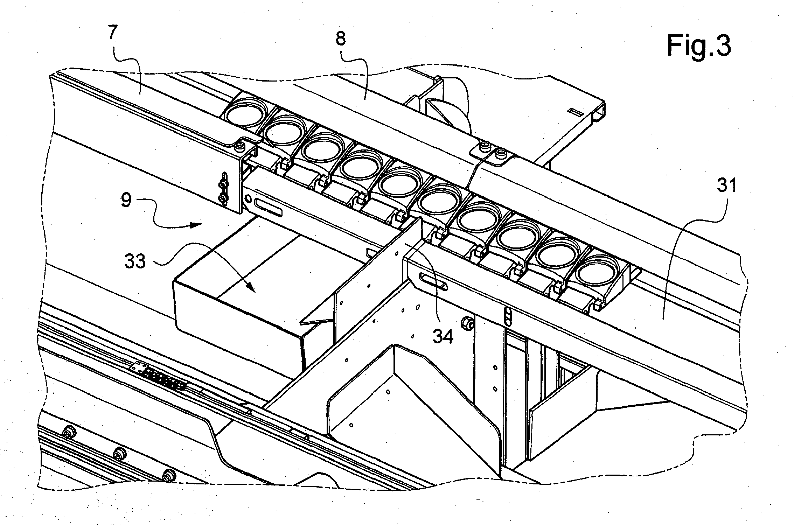

La figure 3 est une vue de détail du premier moyen d'élimination des fruits surnuméraires 9. L'élimination se fait ici grâce à la suppression sur une certaine longueur du guide intérieur 7. Les fruits surnuméraires sont évacués et tombent dans un réceptacle 33 prévu à cet effet en étant arrêtés et déviés par une barrière 34.

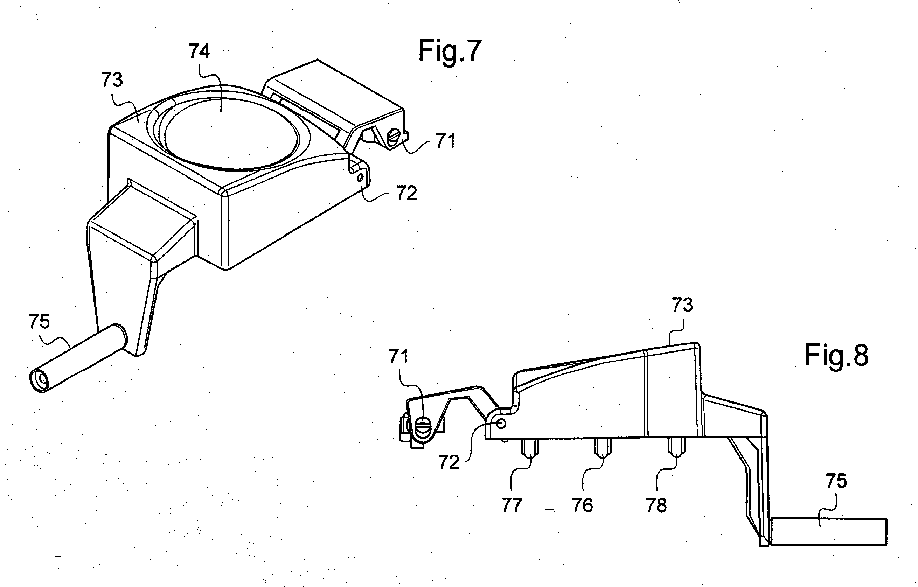

L'élimination des fruits surnuméraires est en outre favorisée par la forme particulière des coupelles telles qu'illustrées dans les figures 7 et 8. Chaque coupelle comporte ici trois parties, dont un dispositif d'arrimage 71 au convoyeur A muni d'une articulation 72 permettant à la coupelle de basculer en se relevant, un plateau 73 muni d'un logement 74, et un doigt 75 qui s'étend vers l'extérieur pour collaborer avec l'un des basculeurs 13 du dispositif de sélection pour permettre l'éjection du fruit contenu dans le logement 74 de la coupelle. La surface supérieure du plateau 73 de la coupelle est inclinée de telle sorte que le bas de la pente soit situé vers l'articulation 72, c'est-à-dire vers l'intérieur de la boucle du convoyeur. Ainsi, les fruits surnuméraires en déséquilibre sur le plateau des coupelles sont naturellement entrainés par gravité contre le guide intérieur 7, et en son absence, les fruits tombent dans le réceptacle 33 et sont ainsi éliminés du convoyeur A.

Les coupelles 5 sont chacune munies de trois roues disposées en triangle comme visible sur la figure 8, avec une roue avant 76 et deux roues arrière 77 et 78 qui roulent sur une piste 31 formant le fond du convoyeur A, visible par exemple sur la figure 3.

L'homme du métier saura déterminer les dimensions des coupelles en fonction des produits à trier. A titre d'exemple, la largeur des coupelles peut-être de 75 mm ou de 100 mm. Une coupelle de 75 mm sera parfaitement adaptée aux fruits ayant des dimensions comprises entre 50 et 100 mm, tels que le kiwi ou l'abricot. Une coupelle de plus de 100 mm sera préférablement utilisée pour les fruits plus gros tels que le melon.

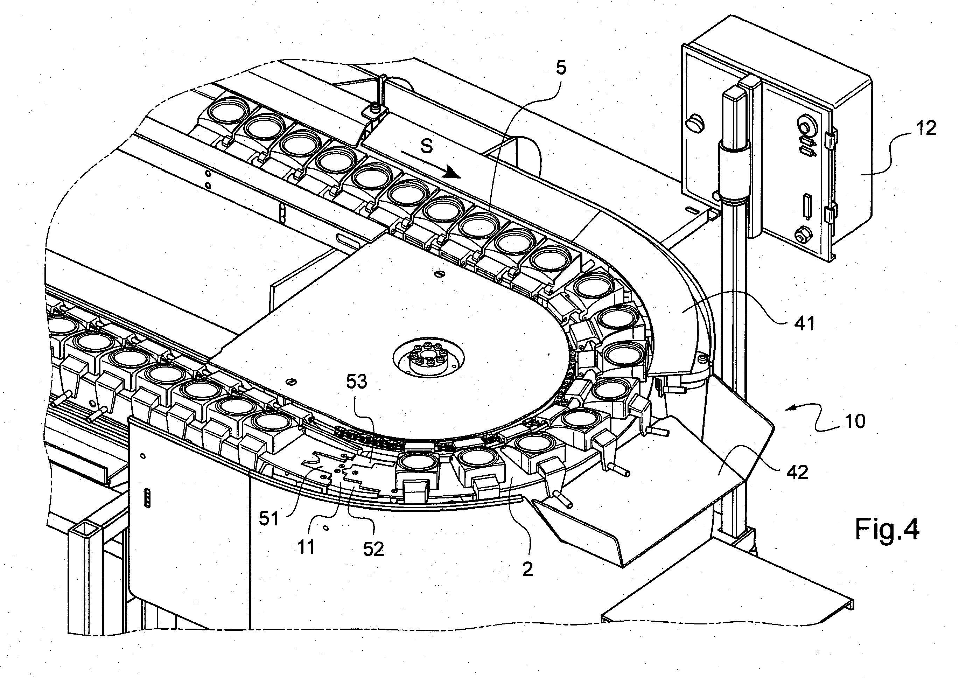

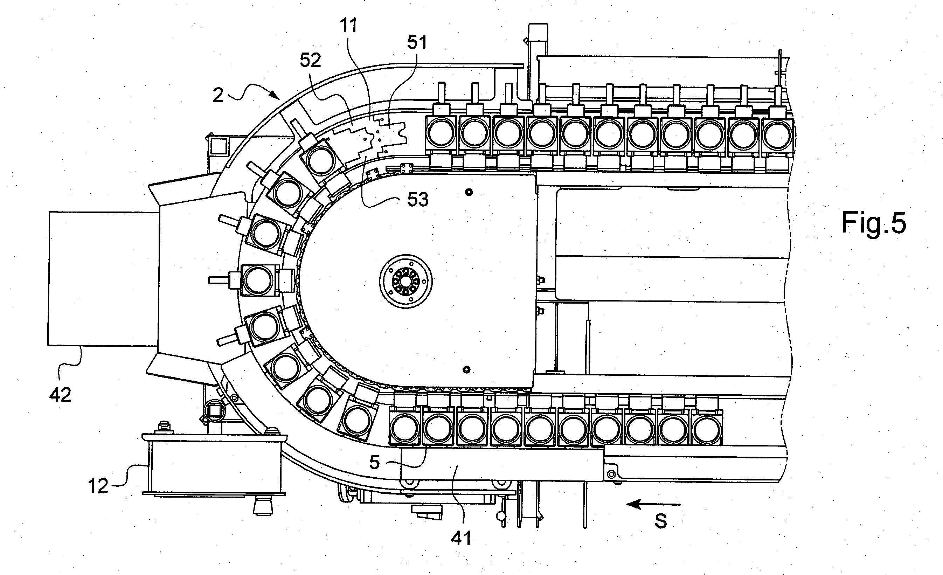

Les figures 4 et 5 sont des vues de détail de la première courbe 2. L'entrée des coupelles dans la première courbe 2 a une double conséquence, d'une part, les fruits surnuméraires restant vont subir une accélération centrifuge et d'autre part, les coupelles vont s'écarter les unes des autres. Le deuxième moyen d'élimination des fruits surnuméraires 10 met à profit ce double effet. Les fruits en déséquilibre, sous l'effet de la force centrifuge, sont éjectés vers la rampe externe 41 et, lorsque celle-ci s'interrompt, tombent dans un réceptacle 42 prévu à cet effet. La rampe 41 court ici de l'entrée de la courbe 2 à sensiblement la moitié de cette courbe et comprend une bande de tôle recouverte de mousse synthétique formant une pente douce dont le point bas affleure avec le bord extérieur des coupelles. Les fruits surnuméraires restant encore à cheval entre deux coupelles sont enfin éliminés lors de leur passage au niveau du réceptacle 42. En effet, au droit du réceptacle 42, il n'y a plus ni guide ni rampe à la hauteur du réceptacle 42 de sorte que, lorsque les coupelles s'écartant sous l'effet de la courbure, les fruits à cheval entre deux coupelles tombent d'eux-mêmes dans le réceptacle 42.

Ainsi, à l'entrée de la deuxième moitié de la première courbe 2, tous les fruits surnuméraires sont normalement éliminés et chaque fruit à trier est stabilisé dans un logement 74 de l'une des coupelles 5.

Les figures 4 et 5 illustrent plus précisément la sole de pesage 11 disposée dans la deuxième moitié de la première courbe 2. La sole de pesage 11 est configurée en forme de chevron de telle sorte qu'une seule coupelle soit pesée à la fois. Lors du déplacement des coupelles, la roue avant 76 se positionne sur la pointe avant 51 de la sole de pesage 11 tandis que les deux roues arrière 77 et 78 se positionneront sur les côtés 52 et 53 de la sole de pesage. La coupelle ainsi positionnée sur la sole de pesage, la mesure est effectuée sans ambigüité.

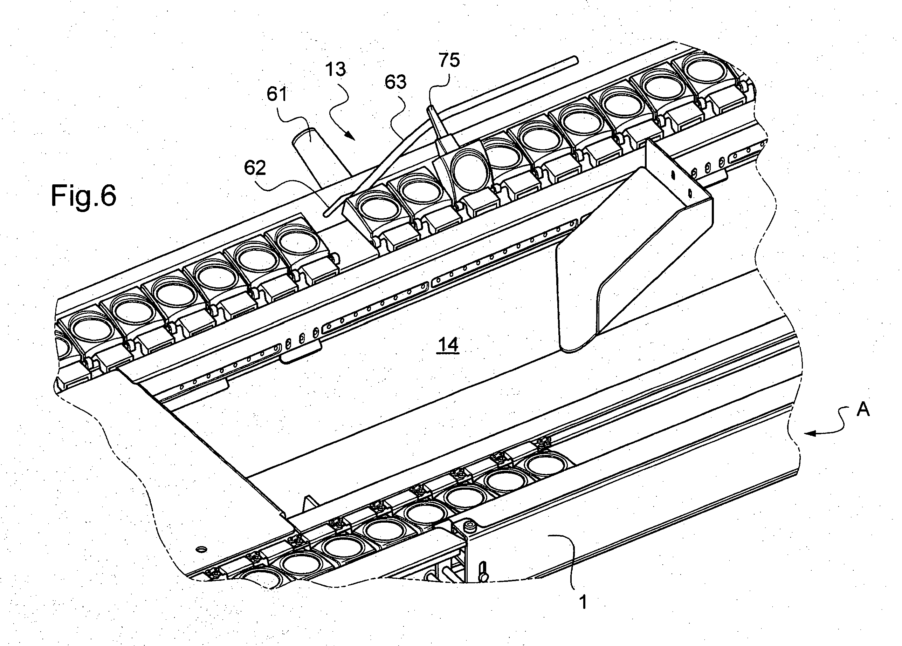

La figure 6 illustre les moyens de sélection et d'évacuation des fruits après pesée. L'information concernant la masse acquise grâce à la sole de pesage 11 est traitée par l'ordinateur 12 qui commande sélectivement l'un des multiples basculeurs 13 disposés le long de la deuxième partie linéaire 3, dont l'un est illustré ici. De tels basculeurs sont décrits en détail dans le document FR 2 777 809. Chaque basculeur 13 comporte un actionneur 61 capable d'actionner un index 62 pour entrer en coopération avec le doigt 75 de la coupelle à basculer. Le doigt 75 est alors aiguillé sur une glissière 63, ce qui provoque le basculement de la coupelle et l'éjection du fruit dans l'un des compartiments 14 prévus à cet effet qui s'étendent sous la première partie linéaire 1 du convoyeur pour déboucher à l'extérieur de la première partie linéaire 1. Les compartiments 14 sont cloisonnés pour guider les fruits vers le banc 15 où ils peuvent être récupérés pour être conditionnés en fonction de leur masse. Une fois le fruit éjecté, la glissière 63 s'interrompt et la coupelle reprend sa position initiale et termine son parcours jusqu'à de nouveau réceptionner les produits délivrés par le convoyeur d'alimentation 8.

L'invention n'est pas limitée au mode de réalisation qui vient d'être décrit, mais englobe au contraire toute variante reprenant avec des moyens équivalents des caractéristiques essentielles énoncées ci-dessus.

En particulier, bien que le dispositif décrit ici soit utilisé pour trier des fruits, l'invention convient également au tri de tous produits sphériques ou sub-sphériques tels que des légumes comme par exemple des tomates, des oignons, ou des oeufs, des huitres, etc.

Bien que le dispositif comprenne ici des moyens de convoyage configurés selon deux parties linéaires reliées à chaque extrémité par une partie courbe et formant une boucle fermée, l'invention s'applique également à un dispositif ne formant pas une boucle fermée, c'est-à-dire dans lequel deux parties linéaires ne sont reliées qu'à une seule de leurs extrémités par une partie courbe. Il peut en outre comporter un nombre de parties linéaires supérieur à deux.

Bien que le dispositif de tri illustré soit alimenté par un convoyeur à bande, tout autre moyen d'alimentation peut être utilisé. Il peut s'agir d'une alimentation manuelle ou d'une alimentation par d'autres convoyeurs, par exemple un convoyeur à rouleaux. Le moyen d'alimentation est positionné en entrée de la première partie linéaire mais il peut aussi être positionné ailleurs sur les moyens de convoyage en fonction de l'encombrement du dispositif.

Bien qu'ici, le moyen de prise d'informations comprenne une sole de pesage permettant de déterminer la masse des produits contenus dans chaque coupelle, tout autre moyen de prise d'informations pourra être utilisé. Ce peut être à titre d'exemple une mesure du diamètre, une analyse colorimétrique par analyse d'image, une mesure du taux de sucre...

L'élimination des fruits surnuméraires peut être réalisée par tout moyen adapté aux moyens de convoyage utilisés, en particulier au débit du moyen d'alimentation, ou à la vitesse du convoyeur ou à la forme des coupelles employées. Dans une variante de l'invention, un seul moyen d'élimination est utilisé en amont du moyen de prise d'information ; il peut être positionné dans la partie linéaire, dans l'entrée de la courbe ou dans la courbe.

Bien qu'ici les moyens de sélection comprennent des coupelles qui sont soulevées pour éjecter le fruit à trier, les coupelles pourront également être basculées vers le bas ou soulevées vers l'extérieuret plus généralement, tous autres moyens de sélection pourront être utilisés.

Bien qu'ici les moyens de sélection de la présente invention permettent de trier et évacuer en fonction des informations analysées les produits qui sont récupérés par des compartiments qui s'étendent sous l'une des parties linéaires des moyens de convoyage, les compartiments pourront déboucher à l'extérieur de la partie linéaire sur laquelle se situe les moyens de sélection.

## Revendications

1. Dispositif de tri de produits, notamment de fruits ou légumes, comprenant :
- des moyens de convoyage(A) comprenant un train de coupelles (5) et s'étendant selon un trajet qui comprend au moins des première et deuxième parties linéaires (1,3) reliées par au moins une partie courbe (2);
- des moyens d'alimentation (8) des moyens de convoyage en produits à trier suivis par;
- des moyens de prise d'information (11) sur lesdits produits suivis par;
- des moyens de sélection pour sélectionner et évacuer les produits en fonction des informations prises ;
**caractérisé en ce que** les moyens de prise d'information sont disposés dans la partie courbe.

2. Dispositif de tri de produits selon la revendication 1, dans lequel les moyens de convoyage forment une boucle fermée.

3. Dispositif de tri de produits selon la revendication 1, dans lequel les moyens d'alimentation (8) sont agencés pour introduire les produits en entrée de la première partie linéaire (1).

4. Dispositif de tri de produits selon la revendication 1, comportant des moyens d'élimination de produits surnuméraires (9 ;10) en amont des moyens de prise d'information.

5. Dispositif de tri de produits selon la revendication 4, comportant des moyens d'élimination de produits surnuméraires (9) sur la première partie linéaire (1).

6. Dispositif de tri de produits selon la revendication 4 comportant des moyens d'élimination de produits surnuméraires (10) dans la partie courbe (2), avant les moyens de prise d'information.

7. Dispositif de tri de produits selon la revendication 1, dans lequel les moyens de sélection comportent des moyens d'éjection (13, 63) qui sont disposés le long de la deuxième partie linéaire pour éjecter les produits triés vers des compartiments s'étendant sous la première partie linéaire.

8. Dispositif de tri de produits selon la revendication 7, dans lequel les moyens d'éjection comportent un basculeur (13) pour engager sélectivement un doigt (75) d'une coupelle sur une rampe (63) en vue de faire basculer la coupelle et ainsi éjecter le produit.

9. Dispositif de tri de produits selon la revendication 1 dans lequel les moyens de prise d'information comportent une sole de pesage qui est placée dans la partie courbe pour peser individuellement chaque coupelle.

10. Dispositif de tri de produits selon la revendication 1 dans lequel les coupelles ont une face supérieure inclinée vers l'intérieur du dispositif de tri.

## Patentansprüche

1. Vorrichtung zum Sortieren von Produkten, insbesondere von Obst oder Gemüse, umfassend:
- Fördermittel (A), die eine Folge von Schalen (5) umfassen und sich entlang einer Bahn erstrecken, die mindestens einen ersten und einen zweiten linearen Abschnitt (1, 3) umfasst, die über mindestens einen Kurvenabschnitt (2) verbunden sind,
- Zuführungsmittel (8) zum Versorgen der Fördermittel mit zu sortierenden Produkten, gefolgt von
- Informationserfassungsmitteln (11) zur Informationserfassung über die genannten Produkte, gefolgt von
- Auswahlmitteln zum Auswählen und Abführen der Produkte in Abhängigkeit der erfassten Informationen,
**dadurch gekennzeichnet, dass** die Informationserfassungsmittel in dem Kurvenabschnitt angeordnet sind.

2. Vorrichtung zum Sortieren von Produkten nach Anspruch 1, wobei die Fördermittel eine geschlossene Schleife bilden.

3. Vorrichtung zum Sortieren von Produkten nach Anspruch 1, wobei die Zuführungsmittel (8) derart ausgebildet sind, dass sie die Produkte am Einlauf des ersten linearen Abschnitts (1) einführen.

4. Vorrichtung zum Sortieren von Produkten nach Anspruch 1, umfassend Beseitigungsmittel zum Beseitigen überzähliger Produkte (9; 10) stromaufwärts der Informationserfassungsmittel.

5. Vorrichtung zum Sortieren von Produkten nach Anspruch 4, umfassend Beseitigungsmittel zum Beseitigen überzähliger Produkte (9) auf dem ersten linearen Abschnitt (1).

6. Vorrichtung zum Sortieren von Produkten nach Anspruch 4, umfassend Beseitigungsmittel zum Beseitigen überzähliger Produkte (10) in dem Kurvenabschnitt (2) vor den informationserfassungsmitteln.

7. Vorrichtung zum Sortieren von Produkten nach Anspruch 1, wobei die Auswahlmittel Auswurfmittel (13, 63) umfassen, die entlang des zweiten linearen Abschnitts angeordnet sind, um die sortierten Produkte in Richtung von Fächern auszuwerfen, die sich unter dem ersten linearen Abschnitt erstrecken.

8. Vorrichtung zum Sortieren von Produkten nach Anspruch 7, wobei die Auswurfmittel eine Kippvorrichtung (13) umfassen, die dazu bestimmt ist, selektiv mit einem Zapfen (75) einer Schale auf einer Rampe (63) in Eingriff zu kommen, um die Schale zu kippen und so das Produkt auszuwerfen.

9. Vorrichtung zum Sortieren von Produkten nach Anspruch 1, wobei die Informationserfassungsmittel eine Wiegesohle umfassen, die in dem Kurvenabschnitt platziert ist, um jede Schale einzeln zu wiegen.

10. Vorrichtung zum Sortieren von Produkten nach Anspruch 1, wobei die Schalen eine obere Seite haben, die zum Inneren der Sortiervorrichtung hin geneigt ist.

## Claims

1. Device for sorting products, in particular fruit or vegetables, including:
- conveying means (A) including a string of cups (5) and extending along a path which includes at least first and second linear portions (1, 3) connected by at least one curved portion (2);
- means (8) for supplying the conveying means with products to sort followed by;
- means (11) for gathering information on said products followed by;
- selection means for selecting and discharging the products based on the information gathered;
**characterized in that** the information gathering means are in the curved portion.

2. Product sorting device according to claim 1 wherein the conveying means form a closed loop.

3. Product sorting device according to claim 1 wherein the supply means (8) are adapted to introduce the products into the entry of the first linear portion (1).

4. Product sorting device according to claim 1 including means for removing surplus products (9; 10) upstream of the information gathering means.

5. Product sorting device according to claim 4 including means (9) in the first linear portion (1).

6. Product sorting device according to claim 4 including means for removing surplus products (10) in the curved portion (2) and before the information gathering means.

7. Product sorting device according to claim 1 wherein the selection means include ejection means (13, 63) arranged along the second linear portion for ejecting the sorted products into compartments under the first linear portion.

8. Product sorting device according to claim 7 wherein the ejection means include a rocker (13) for selectively engaging a finger (75) of a cup on a ramp (63) in order to tilt the cup and thus eject the product.

9. Product sorting device according to claim 1 wherein said information gathering means include a weighing plate in the curved portion for weighing each cup individually.

10. Product sorting device according to claim 1 wherein the cups have an upper surface inclined toward the interior of the sorting device.
